# FASCICULE DE BREVET EUROPEEN

(11) **EP 2 785 039 B1**
(45) Date de publication et mention de la délivrance du brevet: **08.05.2019**
(21) Numéro de dépôt: 14162044.3
(22) Date de dépôt: 27.03.2014
(51) Int. Cl.: G06K 9/62, H04N 1/32, G06T 1/00

(54) **Procédé et dispositif de tatouage d'une séquence d'images, procédé et dispositif d'authentification d'une séquence d'images tatouées et programme d'ordinateur correspondant**
Tätowierverfahren und -vorrichtung einer Bildfolge, Authentifizierungsverfahren und -vorrichtung einer tätowierten Bildfolge und entsprechendes Computerprogramm
Method and device for tattooing an image sequence, method and device for authenticating a sequence of tattooed images and corresponding computer program

(30) Priorité: 29.03.2013 FR 1352900
(43) Date de publication de la demande: 01.10.2014
(73) Titulaire: Orange, 75015 Paris (FR)
(72) Inventeur: le Guelvouit, Gaëtan, 35235 Thorigne-Fouillard (FR); Daude, François, 35700 RENNES (FR)
(74) Mandataire: Vidon Brevets & Stratégie

(56) Documents cités:
- EP-A1- 1 718 060
- CN-A- 101 527 830
- US-A1- 2007 071 282
- US-A1- 2008 089 552

## Description

### 1. Domaine de l'invention

Le domaine de l'invention est celui de la sécurisation de données vidéo.

Plus précisément, l'invention concerne une technique de tatouage d'une séquence d'images et une technique d'authentification d'une séquence d'images tatouées correspondante, permettant de vérifier l'authenticité d'une telle séquence.

L'invention trouve des applications dans tous les domaines nécessitant la certification de l'authenticité (i.e. la provenance et/ou l'intégrité) d'une séquence d'images, comme la distribution de contenus vidéo ou la sécurisation de vidéos issues de caméras de surveillance.

### 2. Art antérieur

Différentes techniques ont d'ores et déjà été proposées pour prouver l'authenticité d'un document multimédia.

Par exemple, en cryptographie, l'authenticité d'un document est assurée par l'utilisation d'un haché ou d'un MAC (en anglais « Message Authentication Code », en français « code d'authentification de message »).

Selon la technique de hachage cryptographique, on génère un condensé (haché) du document d'origine à sécuriser. Si le document d'origine est modifié, ne serait-ce que d'un seul bit, le condensé obtenu est également modifié. Il est de ce fait possible de savoir que le document d'origine a été modifié.

Un inconvénient de cette technique est qu'elle manque de souplesse. Ainsi, une modification « autorisée » du document d'origine, comme une compression avant transmission, modifie le haché du document, ce qui ne permet plus d'authentifier le document. De plus, cette technique ne permet pas d'identifier le type de modifications subies par le document.

Une autre technique classiquement utilisée pour prouver l'authenticité d'un document est le tatouage, ou « watermarking » en anglais. Une telle technique permet de dissimuler des informations dans le document d'origine, par modification ou distorsion de ce document. Le message à dissimuler par tatouage est un ensemble de bits ou de symboles, dont le contenu dépend de l'application. Il peut s'agir du nom ou d'un identifiant du créateur, d'un identifiant du document d'origine, d'une signature décrivant le document d'origine, etc.

Le tatouage robuste est la plus connue des mises en oeuvre des techniques de dissimulation d'information : on cherche à insérer un message invisible de façon robuste au sein d'un document multimédia. Un tel tatouage est robuste à la compression, en ce sens qu'un message inséré dans un document d'origine par une telle technique de tatouage est toujours lisible après compression du document d'origine.

Il existe aussi des techniques de tatouage fragiles ou semi-fragiles. Ces techniques sont plus ou moins sensibles aux modifications du document marqué. Ces différentes techniques de tatouage, ainsi que des procédés de détection et d'authentification associés, sont par exemple divulgués dans les documents US2007/071282 et EP1718060.

Un inconvénient de ces techniques repose dans la difficulté à régler le compromis entre sensibilité face aux modifications « non-autorisées » (par exemple maquillage d'une image) et robustesse à la compression. En pratique, on ne peut déterminer précisément si un tatouage mal lu est la résultante d'un maquillage ou d'une compression trop forte.

De plus, de telles techniques ne sont pas optimisées pour la sécurisation de documents de type vidéo.

Il existe donc un besoin pour une nouvelle technique permettant de prouver l'authenticité d'un document multimédia, notamment adaptée aux documents de type vidéo.

### 3. Exposé de l'invention

L'invention propose une solution nouvelle qui ne présente pas l'ensemble de ces inconvénients de l'art antérieur, sous la forme d'un procédé de tatouage d'une séquence d'images.

Selon l'invention, un tel procédé met en oeuvre les étapes suivantes, pour au moins une image courante de la séquence, distincte de la première image de la séquence :
- comparaison de l'image courante avec une image précédente de la séquence, délivrant une image de différence représentative d'un mouvement entre l'image précédente et l'image courante ;
- si la différence entre l'image courante et l'image précédente est supérieure à un seuil prédéterminé, tatouage de l'image courante par insertion d'un message comprenant un champ portant un identifiant de l'image courante, un champ portant un haché souple obtenu à partir d'au moins une portion de l'image de différence (premier mode de tatouage), et un champs de contrôle d'erreurs;
- sinon, tatouage de l'image courante par insertion d'un message comprenant un champ portant un identifiant de l'image courante (deuxième mode de tatouage), et un champs de contrôle d'erreurs;

L'invention propose ainsi une nouvelle technique de tatouage d'une séquence d'images, encore appelée vidéo, permettant de sélectionner un mode de tatouage parmi deux modes de tatouage disponibles pour les différentes images de la séquence.

Ainsi, s'il y a peu de changement entre deux images successives de la séquence d'images, le message inséré dans la deuxième image inclus l'identifiant de la deuxième image. En revanche, s'il y a des différences entre les deux images successives de la séquence d'images, le message inséré dans la deuxième image inclus l'identifiant de la deuxième image et un condensé/haché souple d'au moins une partie de la deuxième image.

On rappelle que le hachage souple (ou hachage perceptuel) est une technique inspirée du hachage cryptographique (MD5, SHA-1, etc.), pour caractériser des données multimédia par une signature réduite.

Les principales caractéristiques du haché souple sont qu'il doit être sensible aux caractéristiques interprétables de l'image (points remarquables d'une image par exemple, comme le contour d'un visage, les yeux, etc), mais insensible aux traitements usuels (changement de contraste, de luminosité, compression, etc.). Ces caractéristiques sont notamment décrites dans le document « *A robust soft hash algorithm for digital image signature »* de Fréderic Lefebvre.

Par ailleurs, on considère par exemple que deux images successives de la séquence d'images ne présentent pas ou peu de différences si moins de 10% de pixels différent entre les deux images. Selon un autre exemple, on détermine la moyenne de la valeur des pixels de l'image de différence, et si cette valeur est supérieure à un seuil prédéterminé, on considère que les différences entre les deux images sont significatives. Selon encore un autre exemple, on détermine la moyenne des valeurs absolues des différences (pour la totalité de l'image ou pour chaque zone de l'image), et si cette valeur est supérieure à un seuil prédéterminé (10 par exemple), on considère qu'il y a un mouvement significatif.

De cette façon, il est possible de certifier l'authenticité des différentes images prises indépendamment (un message étant inséré dans chacune de ces images). Il est également possible de certifier l'authenticité entre les images, et donc de la vidéo, puisque le contenu du message tient compte du mouvement entre deux images, s'il y a des différences substantielles entre ces deux images.

En particulier, la technique de tatouage selon l'invention permet de détecter si des images ont été maquillées (i.e. transformées), dupliquées ou supprimées.

Selon une caractéristique particulière de l'invention, si la différence entre l'image courante et l'image précédente est supérieure au seuil prédéterminé, le procédé de tatouage comprend une étape de découpage de l'image de différence en au moins deux zones et une étape de sélection de la zone présentant la plus grande différence. Dans ce cas, le haché souple est obtenu à partir de la zone sélectionnée.

De cette façon, il est possible de réduire la longueur du haché souple, et donc la taille du message à insérer, ce qui permet de conserver un tatouage robuste à la compression. En effet, plus le message est long, moins le tatouage est robuste à la compression. De plus, on optimise le temps de calcul en déterminant un haché/condensé sur une plus petite zone de l'image.

En particulier, le message comprend un champ portant un identifiant de la zone sélectionnée.

Selon une autre caractéristique particulière de l'invention, le champ de contrôle d'erreurs porte par exemple une somme de contrôle, et permet de détecter les erreurs de transmission et limiter les fausses alarmes.

Selon un aspect particulier de l'invention, le champ de contrôle d'erreurs tient compte au moins du champ portant un identifiant de l'image courante et du champ portant un haché souple si la différence entre l'image courante et l'image précédente est supérieure au seuil prédéterminé, ou tient compte du champ portant un identifiant de l'image courante sinon.

En d'autres termes, le contenu du champ de contrôle est défini en tenant compte du contenu des autres champs du message. Il s'agit par exemple d'une somme de contrôle, mettant en oeuvre un calcul de parité sur tous les bits des champs précédents le champ de contrôle. Ces champs précédents comprennent par exemple :
- un champ portant un identifiant de l'image courante, ou
- un champ portant un identifiant de l'image courante et un champ portant un haché souple obtenu à partir de la totalité de l'image de différence, ou
- un champ portant un identifiant de l'image courante, un champ portant un identifiant de la zone sélectionnée, et un champ portant un haché souple obtenu à partir de la zone sélectionnée de l'image de différence.

Selon une autre caractéristique spécifique, le procédé de tatouage met en oeuvre, pour la première image de la séquence, une étape de tatouage de la première image avec un message comprenant un identifiant de l'image. Éventuellement, le message utilisé pour tatouer la première image comprend un champ de contrôle.

Selon un mode de réalisation particulier, les étapes de tatouage mettent en oeuvre un code correcteur d'erreur itératif de type turbo TCQ.

En effet, un tel algorithme de tatouage est facilement paramétrable quant au nombre de bits du message à insérer.

Dans un autre mode de réalisation, l'invention concerne un dispositif de tatouage d'une séquence d'images. Un tel dispositif comprend les modules suivants, activés pour au moins une image courante de la séquence, distincte de la première image de la séquence :
- un module de comparaison de l'image courante avec une image précédente de la séquence, délivrant une image de différence représentative d'un mouvement entre l'image précédente et l'image courante ;
- un module de tatouage insérant dans l'image courante un message comprenant un champ portant un identifiant de l'image courante, un champ portant un haché souple obtenu à partir d'au moins une portion de l'image de différence, et un champs de contrôle d'erreurs, la différence entre l'image courante et l'image précédente est supérieure à un seuil prédéterminé, et un message comprenant un champ portant un identifiant de l'image courante, et un champs de contrôle d'erreurs sinon.

Un tel dispositif de tatouage est notamment adapté à mettre en oeuvre le procédé de tatouage décrit précédemment. Il est par exemple intégré à un émetteur ou à un codeur vidéo, éventuellement dans un système de vidéo-surveillance.

Ce dispositif pourra bien sûr comporter les différentes caractéristiques relatives au procédé de tatouage selon l'invention, qui peuvent être combinées ou prises isolément. Ainsi, les caractéristiques et avantages de ce dispositif sont les mêmes que ceux du procédé de tatouage. Par conséquent, ils ne sont pas détaillés plus amplement.

L'invention concerne par ailleurs un procédé d'authentification d'une séquence d'images tatouées, apte à authentifier une séquence d'images obtenue en mettant en oeuvre le procédé de tatouage décrit ci-dessus.

Selon l'invention, un tel procédé d'authentification met en oeuvre les étapes suivantes, pour au moins une image tatouée courante de la séquence d'images tatouées :
- lecture d'au moins une partie d'un message préalablement inséré dans l'image tatouée courante ;
- détermination d'un mode de tatouage utilisé par le procédé de tatouage pour tatouer une image d'origine correspondant à l'image tatouée courante, par analyse du contenu de la partie du message, de façon à identifier le ou les champs composant le message ;
- authentification ou non de la séquence d'images tatouées.

Un tel procédé est notamment adapté à authentifier une séquence d'images tatouées en utilisant le procédé décrit ci-dessus.

Il permet de certifier l'authenticité intra image et inter images d'une séquence d'images, encore appelée vidéo. En particulier, il permet de détecter si une ou plusieurs images de la séquence ont été modifiées, et d'identifier le type de modification affectant les images de la séquence (images supprimées, dupliquées, et/ou maquillées).

Selon un mode de réalisation particulier, l'étape de lecture lit un nombre prédéterminé de bits correspondant à la somme de la taille d'un champ portant un identifiant d'image et de la taille d'un champ de contrôle d'erreurs obtenus pour l'image tatouée courante, et l'étape de détermination d'un mode de tatouage met en oeuvre une première sous-étape de vérification de la lecture de l'intégralité du message, basée sur le contenu du champ de contrôle d'erreurs.

Ces premières étapes de lecture et de vérification permettent de déterminer le mode de tatouage utilisé lors du tatouage de l'image d'origine correspondante (i.e. délivrant un message comprenant un champ portant un identifiant d'image et un champ portant un haché souple selon un premier mode de tatouage, ou délivrant un message comprenant un champ portant un identifiant de l'image courante selon un deuxième mode de tatouage).

Selon une caractéristique particulière, si la première sous-étape de vérification de la lecture de l'intégralité du message confirme que l'intégralité du message a été lue, le procédé d'authentification comprend une étape de comparaison de l'identifiant d'image avec un identifiant d'image obtenu pour une image tatouée précédente de la séquence d'images tatouées.

Une telle comparaison permet notamment de détecter si une image a été dupliquée ou supprimée.

Selon une autre caractéristique particulière, si l'identifiant d'image obtenu pour l'image tatouée courante et l'identifiant obtenu pour l'image tatouée précédente sont successifs, le procédé d'authentification comprend une étape de comparaison de l'image tatouée courante et de l'image tatouée précédente, délivrant une image de différence représentative d'un mouvement entre l'image tatouée précédente et l'image tatouée courante, et l'étape d'authentification authentifie l'image tatouée courante si la différence entre l'image tatouée courante et l'image tatouée précédente est inférieure au seuil prédéterminé.

Une telle comparaison permet notamment de détecter si une image a été maquillée pour insérer un élément. En particulier, une telle comparaison permet de détecter si un mouvement a été effacé.

Selon une autre caractéristique particulière, si la première sous-étape de vérification de la lecture de l'intégralité du message confirme que l'intégralité du message n'a pas été lue, le procédé d'authentification comprend :
- une étape de lecture d'un nombre complémentaire de bits du message, correspondant au moins à la taille d'un champ portant un haché souple obtenu pour l'image tatouée courante ;
- une deuxième sous-étape de vérification de la lecture de l'intégralité du message, basée sur le contenu du champ de contrôle d'erreurs.

Ces deuxièmes étapes de lecture et de vérification permettent de vérifier que le message comprend un champ portant un identifiant d'image et un champ portant un haché souple. Si tel n'est pas le cas, cela signifie que l'image est trop dégradée, voire n'a pas été marquée.

Selon encore une autre caractéristique particulière, si la deuxième sous-étape de vérification de la lecture de l'intégralité du message confirme que l'intégralité du message a été lue, le procédé d'authentification comprend une étape de comparaison de l'image tatouée courante avec une image tatouée précédente de la séquence d'images tatouées, délivrant une image de différence représentative d'un mouvement entre l'image tatouée précédente et l'image tatouée courante, et une étape de détermination du haché souple d'au moins une portion de l'image de différence. Dans ce cas, l'étape d'authentification authentifie l'image tatouée courante si le haché souple obtenu au cours de l'étape de détermination correspond au contenu du champ portant un haché souple du message.

Une telle comparaison permet notamment de détecter si une image a été maquillée, par exemple en remplaçant un visage par un autre.

En particulier, le procédé d'authentification comprend une étape de découpage de l'image de différence en au moins deux zones, une étape de sélection de la zone présentant la plus grande différence, et une étape de vérification que la zone sélectionnée correspond au contenu d'un champ portant un identifiant de zone du message. Dans ce cas, le haché souple est déterminé à partir de la zone sélectionnée.

On calcule de ce fait un haché plus court, ce qui permet de diminuer le temps de calculs et, au niveau du tatouage, de conserver un tatouage robuste à la compression.

Dans un autre mode de réalisation, l'invention concerne un dispositif d'authentification d'une séquence d'images tatouées, apte à authentifier une séquence d'images issue du dispositif de tatouage décrit précédemment.

Selon l'invention, un tel dispositif comprend les modules suivants, activés pour au moins une image tatouée courante de la séquence d'images tatouées :
- un module de lecture d'au moins une partie d'un message préalablement inséré dans l'image tatouée courante ;
- un module de détermination d'un mode de tatouage utilisé par le dispositif de tatouage pour tatouer une image d'origine correspondant à l'image tatouée courante, par analyse du contenu de la partie du message, identifiant le ou les champs composant le message ;
- un module d'authentification de la séquence d'images tatouées.

Un tel dispositif d'authentification est notamment adapté à mettre en oeuvre le procédé d'authentification décrit précédemment. Il est par exemple intégré à un récepteur (par exemple de type « set top box » en anglais, ou « boîtier décodeur » en français) ou à un décodeur vidéo.

En particulier, il est adapté à authentifier une séquence d'images tatouées issue du dispositif de tatouage décrit ci-dessus.

Ce dispositif pourra bien sûr comporter les différentes caractéristiques relatives au procédé d'authentification selon l'invention, qui peuvent être combinées ou prises isolément. Ainsi, les caractéristiques et avantages de ce dispositif sont les mêmes que ceux du procédé d'authentification. Par conséquent, ils ne sont pas détaillés plus amplement.

Dans encore un autre mode de réalisation, l'invention concerne un ou plusieurs programmes d'ordinateur comportant des instructions pour la mise en oeuvre d'un procédé de tatouage et/ou des instructions pour la mise en oeuvre d'un procédé d'authentification tels que décrits ci-dessus, lorsque ce ou ces programmes sont exécutés par un processeur.

Les procédés selon l'invention peuvent donc être mis en oeuvre de diverses manières, notamment sous forme câblée ou sous forme logicielle.

L'invention concerne aussi un support d'informations lisible par un ordinateur, et comportant des instructions d'un programme d'ordinateur tel que mentionné ci-dessus.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes mises en oeuvre par la technique de tatouage d'une séquence d'images selon un mode de réalisation particulier de l'invention ;
- la figure 2 présente les principales étapes mises en oeuvre par la technique d'authentification d'une séquence d'images selon un mode de réalisation particulier de l'invention ;
- les figures 3A à 3C illustrent la construction d'une image de différence et sa segmentation en plusieurs zones ;
- la figure 4 présente un organigramme d'un exemple de mise en oeuvre de la technique d'authentification selon la figure 2 ;
- les figures 5 et 6 illustrent respectivement la structure simplifiée d'un dispositif de tatouage mettant en oeuvre une technique de tatouage d'une séquence d'images, et un dispositif d'authentification d'une séquence d'images mettant en oeuvre une technique d'authentification selon un mode de réalisation particulier de l'invention.

### 5. Description d'un mode de réalisation de l'invention

### 5.1 Principe général

Le principe général de l'invention repose sur le tatouage d'un message différent dans les différentes images d'une séquence d'images, tenant notamment compte du mouvement entre les images successives.

Il est de ce fait possible d'authentifier une séquence d'images tatouées reçue, en vérifiant qu'elle ne contient pas d'images dupliquées, maquillées, ou supprimées.

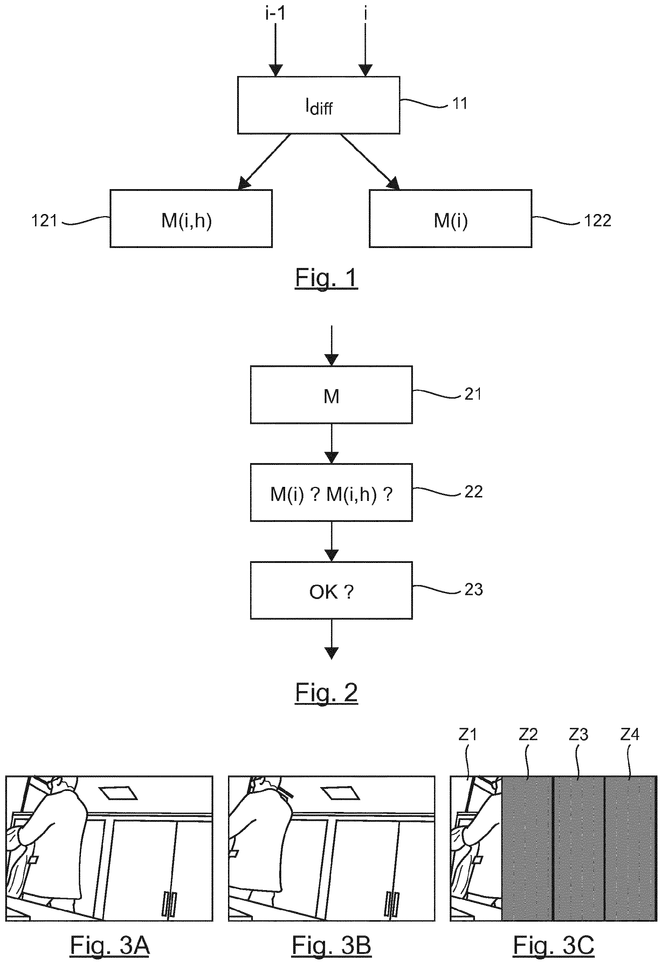

On illustre en relation avec la figure 1 les principales étapes mises en oeuvre pour le tatouage d'une séquence d'images selon l'invention.

On considère une image *i* de la séquence d'images, dite image courante, distincte de la première image de la séquence.

Au cours d'une première étape 11, l'image courante *i* est comparée avec une image précédente de la séquence, notée *i* - 1. On obtient ainsi une image de différence *I_{diff},* représentative d'un mouvement entre l'image précédente *i* - 1 et l'image courante *i.*

S'il y a des différences significatives entre l'image courante *i* et l'image précédente *i* - 1, c'est-à-dire si la différence entre l'image courante *i* et l'image précédente *i* - 1 est supérieure à un seuil prédéterminé, alors on insère un message M dans l'image courante *i* comprenant un champ portant un identifiant de l'image courante et un champ portant un haché souple obtenu à partir d'au moins une portion de l'image de différence, au cours d'une étape 121.

Sinon, c'est-à-dire si la différence entre l'image courante *i* et l'image précédente *i* - 1 est inférieure ou égale à un seuil prédéterminé, alors on insère un message M dans l'image courante *i* comprenant un champ portant un identifiant de l'image courante au cours d'une étape 122.

Par exemple, on détermine la moyenne de la valeur des pixels de l'image de différence, et si cette valeur est supérieure à un seuil prédéterminé, on considère que les différences entre l'image courante *i* et l'image précédente *i* - 1 sont significatives. Selon un autre exemple, on détermine la moyenne des valeurs absolues des différences (pour la totalité de l'image ou, si l'image est découpée en zones, pour chaque zone de l'image). Si la moyenne des valeurs absolues est supérieure à un seuil prédéterminé, 10 par exemple, alors on considère qu'il y a un mouvement significatif.

Le message inséré dans les différentes images de la séquence d'images est donc différent d'une image à l'autre (puisqu'il porte dans tous les cas un identifiant de l'image), mais n'est pas indépendant image par image, puisqu'il tient compte du mouvement apparaissant entre deux images successives lorsque celles-ci présentent des différences significatives.

On note que, dans la mesure où il n'est pas possible de déterminer d'image de différence pour la première image de la séquence, on tatoue la première image avec un message comprenant un champ portant un identifiant de la première image (par exemple l'indice '0'). Éventuellement, le message comprend également un champ de contrôle.

Afin de vérifier l'authenticité (i.e. provenance et/ou intégrité) d'une séquence d'images tatouées en utilisant la technique présentée ci-dessus, on met en oeuvre les principales étapes suivantes, illustrées en figure 2.

On considère une image *iₜ* de la séquence d'images tatouées, dite image tatouée courante, qui est censée correspondre à l'image courante *i* d'origine dans laquelle on a inséré un message.

Au cours d'une première étape 21, on lit au moins une partie du message M préalablement inséré dans l'image tatouée courante *iₜ.*

Au cours d'une deuxième étape 22, on détermine le mode de tatouage utilisé pour le tatouage d'une image d'origine correspondant à l'image tatouée courante, en analysant le contenu de la partie du message lue, de façon à identifier le ou les champs composant le message. On cherche au cours de cette deuxième étape à déterminer si le message comprend un champ portant un haché, ce qui signifierait qu'il existe des différences significatives entre l'image tatouée courante *iₜ* et une image tatouée précédente (*i* - 1*)ₜ*.

L'analyse du contenu du message M permet notamment de décider, au cours d'une troisième étape 23, si la séquence d'images tatouées est authentique (i.e. non falsifiée) ou non, et éventuellement quelles images de la séquence ont été modifiées/supprimées/dupliquées.

L'invention permet ainsi, selon au moins un mode de réalisation, de certifier l'authenticité inter image et intra images d'une séquence d'images, qu'elle soit compressée ou non (encodage type MPEG par exemple). En d'autres termes, elle permet de prouver qu'une vidéo n'a été modifiée ni dans sa structure (la suite des images qui la compose), ni dans sa forme, tout en restant insensible à la compression. Elle permet notamment de détecter si des images ont été supprimées ou dupliquées, et si des images ont été maquillées (par exemple, en remplaçant un visage par un autre).

### 5.2 Description d'un mode de réalisation particulier

On présente ci-après un mode de réalisation particulier de l'invention, selon lequel on combine l'utilisation d'une technique de tatouage d'image robuste, un haché souple, et un système de détection d'erreur, pour lier les images séquentielles de la vidéo.

En reprenant les étapes de la figure 1, au cours de la première étape 11, l'image courante *i* est comparée avec une image directement précédente de la séquence, notée *i* - 1. On obtient ainsi une image de différence *I_{diff}*, représentative d'un mouvement entre l'image précédente *i* - 1 et l'image courante *i.*

Selon ce mode de réalisation particulier, s'il n'y a pas de différences significatives entre l'image courante *i* et l'image précédente *i* - 1, le message à tatouer dans l'image courante comprend deux champs, l'un portant un identifiant de l'image courante, codé par exemple sur A bits, et l'autre servant de champ de contrôle, codé par exemple sur D bits.

Toujours selon ce mode de réalisation particulier, s'il y a des différences significatives entre l'image courante *i* et l'image précédente *i* - 1, le message à tatouer dans l'image courante comprend au moins trois champs, l'un portant un identifiant de l'image courante, codé par exemple sur A bits, un autre portant un haché souple obtenu à partir d'au moins une portion de l'image de différence, codé par exemple sur C bits, et un dernier servant de champ de contrôle, codé par exemple sur D bits.

Par exemple, le champ portant un identifiant de l'image courante porte le numéro d'apparition de l'image courante dans la séquence d'images. Le champ de contrôle porte une somme de contrôle relative aux autres champs du message (en anglais « checksum »), comme un calcul de parité sur tous les bits précédents. De ce fait, la somme de contrôle est déterminée une fois que les champs précédents sont complétés. Elle est donc déterminée soit à partir du champ portant l'identifiant de l'image uniquement, soit à partir d'une concaténation du champ portant l'identifiant de l'image et du champ portant un haché souple. Selon une variante décrite ci-après, la somme de contrôle peut également être déterminée à partir d'une concaténation du champ portant l'identifiant de l'image, du champ portant un identifiant de zone, et du champ portant un haché souple calculé uniquement sur cette zone.

Classiquement, la fonction de hachage prend en entrée une image, une clé (optionnelle) et rend le haché sous la forme d'un vecteur binaire.

A titre d'exemple, on considère que la fonction de hachage implémentée selon ce mode de réalisation particulier met en oeuvre une comparaison des moyennes de luminosité de blocs aléatoires. Par exemple, la fonction de hachage délivre un bit égal à 1 si la luminosité d'un bloc courant est supérieure à celle d'un bloc suivant selon l'ordre de parcours des blocs dans une image, égal à 0 sinon. Bien entendu, d'autres algorithmes de détermination du haché souple pourraient être utilisées, comme le calcul d'un haché souple basé sur les différences entre les coefficients DC d'un bloc de l'image de différence considéré.

Par exemple, le champ portant un haché souple porte le haché souple obtenu à partir de la totalité de l'image de différence.

Selon une variante, le champ portant un haché souple porte le haché souple obtenu à partir d'une portion seulement de l'image de différence. En effet, il est à noter que la précision de détection de modification du haché souple est fonction de sa longueur : un haché plus long permet d'encoder plus de caractéristiques de l'image, et autorise donc une détection plus fine si une des caractéristiques est altérée. Toutefois, plus le haché, et donc le message à insérer par tatouage, est long, et moins le tatouage sera robuste. En effet, la robustesse du schéma de tatouage dépend du nombre de bits du message M. Ainsi, pour une même distorsion d'insertion, un message plus court sera plus robuste.

Ainsi, selon cette variante, pour limiter la taille du haché tout en conservant une bonne précision, on fait l'hypothèse que deux images consécutives d'une vidéo sont très proches. On découpe alors l'image de différence obtenue entre ces deux images consécutives en au moins deux zones, et on calcule le haché souple uniquement sur la zone la plus différente, c'est-à-dire celle où il y a le plus de mouvement. Par exemple, on détermine la moyenne des valeurs absolues des différences pour chaque zone et on sélectionne la zone présentant la valeur la plus élevée, si cette valeur est supérieure à un seuil prédéterminé (par exemple supérieure à 10).

Ceci est notamment illustré en figures 3A à 3C, illustrant respectivement l'image précédente *i* - 1 d'une vidéo, l'image courante *i* de la vidéo, et une troisième image correspondant à la différence entre les deux images séquentielles *i* - 1 et *i.* La troisième image est par exemple découpée en quatre zones Z1 à Z4, et on identifie que c'est la première zone Z1 qui comprend le plus de mouvement. Le haché souple est alors calculé uniquement sur cette première zone. Il est ainsi possible de diviser la taille du haché par 2, 4, 8 ou plus, suivant le nombre de zones choisi.

De plus, selon cette variante, le message à tatouer dans l'image courante comprend un champ supplémentaire, portant un identifiant de la zone sélectionnée, formé par exemple de B bits. Par exemple, le champ portant un identifiant de la zone sélectionnée porte le numéro de la zone sélectionnée.

Le message ainsi construit peut alors être inséré dans l'image courante *i*, en utilisant un algorithme de tatouage d'image robuste quelconque. Il s'agit par exemple d'un algorithme utilisant un code correcteur d'erreur itératif de type turbo TCQ et une transformation d'étalement, le tout dans le domaine DCT (en anglais « discrète cosinus transform ») de l'image, tel que décrit dans le document « Tatouage robuste d'images par turbo TCQ » (G. Le Guelvouit, Traitement du Signal, vol. 25, num. 6, Avr. 2009). Selon un autre exemple, l'algorithme de tatouage peut être un algorithme de tatouage robuste tel que décrit dans le document « Dirty-paper trellis codes for watermarking » (M. L. Miller, G. J. Doërr et I. J. Cox., IEEE Int. Conf. on Image Processing, Rochester, NY, Sep. 2002) ou « Scalar Costa scheme for information embedding » (J. J. Eggers, R. Baüml, R. Tzchoppe et B. Girod., IEEE Trans. on Signal Processing, Avril 2003).

Un tel algorithme prend en entrée l'image courante à tatouer *i*, un message M construit comme expliqué ci-dessus, une clé de tatouage k, éventuellement une distorsion d, et délivre une image tatouée ou marquée *iₜ.*

En résumé, selon ce mode de réalisation particulier et si l'on considère la variante selon laquelle le haché souple est calculé uniquement sur une portion de l'image, le message à tatouer sera composé de deux ou quatre champs :
- un identifiant d'image sur A bits, et
- un champ de contrôle sur D bits pour contrôler l'intégrité du message,
   s'il n'y a pas ou peu de mouvement entre l'image courante à tatouer et l'image précédente ;
- un identifiant d'image sur A bits,
- un identifiant de zone sur B bits,
- un haché souple correspondant à cette zone sur C bits, et
- un champ de contrôle sur D bits pour contrôler l'intégrité du message.
s'il y a un mouvement significatif entre l'image courante à tatouer et l'image précédente.

En d'autres termes, les champs portant le numéro de la zone et le haché souple sont optionnels : s'il n'y a pas de mouvement, il est inutile de tatouer cette partie.

A nouveau, dans la mesure où il n'est pas possible de déterminer d'image de différence pour la première image de la séquence, on tatoue la première image, selon ce mode de réalisation particulier, avec un message comprenant deux champs : l'un portant un identifiant de la première image ('0' par exemple) sur A bits, et l'autre servant de champ de contrôle (bit de parité correspondant par exemple) sur D bits.

Les opérations décrites ci-dessus peuvent alors être répétées pour tatouer les images suivantes de la séquence d'images. Il y a donc deux modes de tatouage possible pour chaque image de la séquence d'images : sur A + D bits lorsque le mouvement entre l'image courante et l'image précédente n'est pas significatif, et sur A(+B)+C+D= n bits sinon.

On présente ci-après les opérations mises en oeuvre pour vérifier l'authenticité d'une séquence d'images tatouées selon le mode de réalisation particulier décrit ci-dessus.

En particulier, on considère la variante selon laquelle le haché souple est calculé uniquement sur une portion de l'image. Le message inséré dans les images de la séquence est donc composé de deux ou quatre champs.

En reprenant les étapes de la figure 2, au cours de la première étape 21, on lit au moins une partie du message préalablement inséré dans l'image tatouée courante *iₜ.* Pour ce faire, on lit la marque présente dans l'image tatouée courante *iₜ* sur un nombre de bits correspondant à la somme de la taille d'un champ portant un identifiant d'image (A bits) et de la taille d'un champ de contrôle d'erreurs (D bits), où la marque correspond aux différences entre une image d'origine et sa version tatouée.

On vérifie alors (42) la somme de contrôle : si elle est correcte, cela signifie que le message est bien codé sur (A+D) bits, et que l'on a lu l'intégralité du message. Si elle n'est pas correcte, cela signifie que le message était codé sur (n=A+B+C+D) bits et que l'on n'a pas lu l'intégralité du message.

Si la somme de contrôle est correcte, alors on compare (431) l'identifiant reçu pour l'image tatouée courante (*iₜ*) avec un identifiant d'image obtenu pour une image tatouée précédente (*i* - 1)*ₜ* de la séquence d'images tatouées.

Si le résultat n'est pas cohérent, i.e. si les numéros d'images obtenus ne sont pas successifs, cela signifie que certaines images ont été dupliquées ou supprimées. Par exemple, si le champ d'identifiant associé à l'image tatouée courante porte le numéro 5, alors que le champ d'identifiant associé à l'image tatouée précédente porte le numéro 3, cela signifie que l'image numéro 4 a été supprimée de la séquence d'images. De la même façon, si deux images tatouées successives portent le numéro 7, cela signifie qu'une image a été dupliquée.

Si le résultat est cohérent, i.e. si les numéros d'images obtenus sont successifs, on compare (432) l'image tatouée courante (*iₜ*) et l'image tatouée précédente (*i* - 1)*ₜ*, de façon à déterminer une image de différence *Idiffₜ* représentative d'un mouvement entre l'image tatouée précédente et l'image tatouée courante.

S'il y a des différences significatives (433), cela signifie que l'image tatouée courante a été maquillée pour insérer un élément. En effet, du fait de l'algorithme de tatouage utilisé, on utilise un mode de tatouage sur A + D bits lorsque le mouvement entre l'image courante et l'image précédente n'est pas significatif, et sur A(+B)+C+D= n bits sinon. Or ici le mode de tatouage utilisé pour tatouer l'image d'origine *i* correspondante est sur A + D bits, ce qui signifie qu'il n'y a pas, ou peu, de différences entre l'image d'origine *i* et l'image d'origine précédente *i* - 1. Il ne devrait donc pas y avoir, ou avoir peu, de différences entre l'image tatouée courante (*iₜ*) et l'image tatouée précédente (*i* - 1)*ₜ*. La présence d'un mouvement significatif signifie que des éléments ont été modifiés à l'intérieur de l'image tatouée courante (*iₜ*).

En revanche, s'il n'y a pas de différences significatives, l'authenticité de l'image tatouée courante (*iₜ*) est prouvée, et on peut effectuer les mêmes opérations pour l'image tatouée suivante (*i* + 1)*ₜ*.

Si, lors de la vérification (42) de la somme de contrôle, on constate que la somme de contrôle n'est pas correcte, alors on lit (441) la marque présente dans l'image tatouée courante *iₜ* sur un nombre de bits correspondant à la somme de la taille d'un champ portant un identifiant d'image (A bits), de la taille d'un champ portant un identifiant de zone (B bits), de la taille d'un champ portant un haché souple (C bits) et de la taille d'un champ de contrôle d'erreurs (D bits).

On vérifie à nouveau (442) la somme de contrôle : si elle est correcte, cela signifie que le message est bien codé sur (A+B+C+D) bits, et que l'on a lu l'intégralité du message. Si elle n'est pas correcte, cela signifie que l'image tatouée courante est trop dégradée, voire ne contient pas de marque.

Si la somme de contrôle est correcte, alors on compare (443) l'image tatouée courante *iₜ* avec une image tatouée précédente (*i* - 1)*ₜ* de la séquence d'images tatouées, de façon à déterminer une image de différence *Idiffₜ* représentative d'un mouvement entre l'image tatouée précédente et l'image tatouée courante.

Comme selon le mode de réalisation particulier considéré le haché souple est calculé uniquement sur une portion de l'image, on sélectionne (444) la zone de l'image de différence présentant le plus de mouvement, en utilisant le même algorithme de découpage en zones/sélection que celui utilisé lors du tatouage de la séquence d'images.

On vérifie (445) alors si la zone sélectionnée correspond au contenu du champ portant un identifiant de zone du message (sur B bits), par exemple en vérifiant que le numéro de la zone sélectionnée et le numéro de zone porté par le champ sont identiques. Si ce n'est pas le cas, cela signifie que l'image tatouée courante a été maquillée, par exemple en remplaçant le visage d'un personnage par celui d'un autre.

Si l'identifiant de la zone sélectionnée est cohérent avec l'identifiant contenu dans le champ portant un identifiant de zone, on détermine (446) le haché souple de la zone sélectionnée.

On vérifie (447) alors si le haché souple déterminé correspond au contenu du champ portant un haché souple du message (sur C bits), par exemple en vérifiant que le haché souple déterminé et le haché souple porté par le champ sont identiques ou similaires. Si ce n'est pas le cas, cela signifie que l'image tatouée courante a été maquillée.

Si le haché souple déterminé est cohérent avec le haché souple contenu dans le champ portant un haché souple du message, l'authenticité de l'image tatouée courante (*iₜ*) est prouvée, et on peut effectuer les mêmes opérations pour l'image tatouée suivante (*i* + 1)*ₜ*.

En d'autres termes, l'authentification se fait en cascade, en vérifiant quelle longueur de message a été insérée grâce à la somme de contrôle, et en vérifiant si l'identifiant d'image et le haché souple sont corrects.

### 5.3 Variantes envisagées

Dans le mode de réalisation décrit ci-dessus, on a considéré la variante selon laquelle le haché souple n'était pas calculé sur l'intégralité de l'image de différence, mais uniquement sur une zone de cette image. Dans le cas où le haché souple est calculé sur l'intégralité de l'image de différence, les opérations mises en oeuvre pour vérifier l'authenticité d'une séquence d'images tatouées sont identiques à celles décrites ci-dessus, en lisant la marque sur (A+C+D) bits au cours de l'étape 441, et en omettant les étapes 444 et 445 de sélection d'une zone de l'image de différence présentant le plus de mouvement et de comparaison au contenu du champ portant un identifiant de zone du message.

Par ailleurs, dans le mode de réalisation décrit ci-dessus, on a considéré la présence d'un champ de contrôle. Un tel champ de contrôle est facultatif, même s'il est préférable pour détecter les erreurs de transmission ou limiter le nombre fausses alertes. Dans une variante, ce champ pourrait être remplacé par un indicateur indiquant le mode de tatouage utilisé pour l'image, ou en d'autres termes le format du message (comme son nombre de champs).

### 5.4 Structure des dispositifs de tatouage et d'authentification

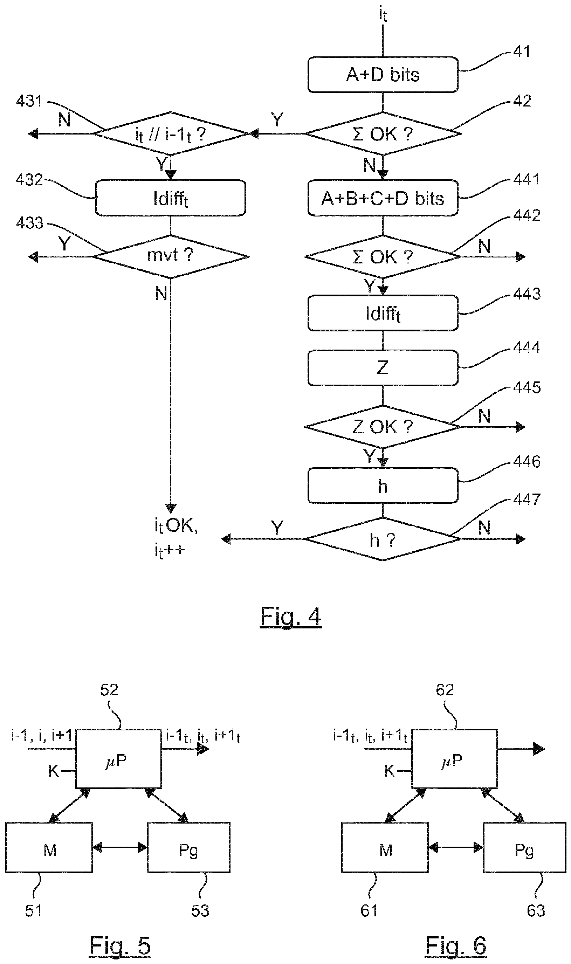

On présente finalement, en relation avec les figures 5 et 6 respectivement, la structure simplifiée d'un dispositif de tatouage mettant en oeuvre une technique de tatouage d'une séquence d'images et la structure d'un dispositif d'authentification mettant en oeuvre une technique d'authentification d'une séquence d'images tatouées selon un mode de réalisation particulier de l'invention.

Comme illustré en figure 5, un tel dispositif de tatouage comprend une mémoire 51 comprenant une mémoire tampon, une unité de traitement 52, équipée par exemple d'un microprocesseur µP, et pilotée par le programme d'ordinateur 53, mettant en oeuvre le procédé de tatouage selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée une séquence d'images à tatouer et une clé de tatouage K. Le microprocesseur de l'unité de traitement 52 met en oeuvre les étapes du procédé de tatouage décrit précédemment, selon les instructions du programme d'ordinateur 53, pour générer une séquence d'images tatouées. Pour cela, le dispositif de tatouage comprend, outre la mémoire tampon 51, un module de comparaison de l'image courante avec une image précédente de la séquence, délivrant une image de différence représentative d'un mouvement entre l'image précédente et l'image courante et un module de tatouage insérant dans l'image courante un message comprenant un champ portant un identifiant de l'image courante et un champ portant un haché souple obtenu à partir d'au moins une portion de l'image de différence, si la différence entre l'image courante et l'image précédente est supérieure à un seuil prédéterminé, ou un message comprenant un champ portant un identifiant de l'image courante sinon.

Ces modules sont pilotés par le microprocesseur de l'unité de traitement 52.

Comme illustré en figure 6, un tel dispositif d'authentification d'une séquences d'images tatouées comprend quant à lui une mémoire 61 comprenant une mémoire tampon, une unité de traitement 62, équipée par exemple d'un microprocesseur µP, et pilotée par le programme d'ordinateur 63, mettant en oeuvre le procédé d'authentification d'une séquences d'images tatouées selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée une séquence d'images tatouées et la clé de tatouage K. Le microprocesseur de l'unité de traitement 62 met en oeuvre les étapes du procédé d'authentification d'une séquence d'images tatouées décrit précédemment, selon les instructions du programme d'ordinateur 63, pour lire les messages associés aux différentes images tatouées de la séquence et déterminer si la séquence d'images traitée est authentique. Pour cela, le dispositif d'authentification comprend, outre la mémoire tampon 61, un module de lecture d'au moins une partie d'un message préalablement inséré dans une image tatouée courante, un module de détermination d'un mode de tatouage utilisé pour le tatouage d'une image d'origine correspondant à l'image tatouée courante, par analyse du contenu de la partie du message, permettant d'identifier le ou les champs composant le message, et un module d'authentification de la séquence d'images tatouées.

Ces modules sont pilotés par le microprocesseur de l'unité de traitement 62.

## Revendications

1. Procédé de tatouage d'une séquence d'images, mettant en oeuvre, pour au moins une image courante de ladite séquence, distincte de la première image de ladite séquence, une étape de comparaison (11) de ladite image courante avec une image précédente de ladite séquence, délivrant une image de différence représentative d'un mouvement entre ladite image précédente et ladite image courante ;
**caractérisé en ce que** :
- si la différence entre ladite image courante et ladite image précédente est supérieure à un seuil prédéterminé, ledit procédé met en oeuvre une étape de tatouage (121) de ladite image courante par insertion d'un message comprenant un champ portant un identifiant de ladite image courante, un champ portant un haché souple obtenu à partir d'au moins une portion de ladite image de différence, et un champ de contôle d'erreurs ;
- sinon, ledit procédé met en oeuvre une étape de tatouage (122) de ladite image courante par insertion d'un message comprenant un champ de contrôle d'erreurs et un champ portant un identifiant de ladite image courante.

2. Procédé de tatouage d'une séquence d'images selon la revendication 1, **caractérisé en ce que**, si la différence entre ladite image courante et ladite image précédente est supérieure audit seuil prédéterminé, il comprend une étape de découpage de ladite image de différence en au moins deux zones et une étape de sélection de la zone présentant la plus grande différence, et **en ce que** ledit haché souple est obtenu à partir de ladite zone sélectionnée.

3. Procédé de tatouage d'une séquence d'images selon la revendication 2 **caractérisé en ce que** ledit message comprend en outre un champ portant un identifiant de ladite zone sélectionnée.

4. Procédé de tatouage d'une séquence d'images selon la revendication 1, **caractérisé en ce que** ledit champ de contrôle d'erreurs tient compte au moins dudit champ portant un identifiant de ladite image courante et dudit champ portant un haché souple si la différence entre ladite image courante et ladite image précédente est supérieure audit seuil prédéterminé, ou tient compte dudit champ portant un identifiant de ladite image courante sinon.

5. Dispositif de tatouage d'une séquence d'images, comprenant un processeur adapté et configuré pour mettre en oeuvre les étapes du procédé selon la revendication 1.

6. Procédé d'authentification d'une séquence d'images tatouées, apte à authentifier une séquence d'images obtenue en mettant en oeuvre le procédé de tatouage de la revendication 1, **caractérisé en ce qu'**il met en oeuvre les étapes suivantes, pour au moins une image tatouée courante de ladite séquence d'images tatouées :
- lecture (21) d'au moins une partie d'un message préalablement inséré dans ladite image tatouée courante, ladite au moins une partie lue comprenant un nombre de bits correspondant à la somme de la taille d'un champ portant un identifiant d'image et de la taille d'un champ de contrôle d'erreurs, obtenus pour ladite image tatouée courante ;
- détermination (22) d'un mode de tatouage utilisé par ledit procédé de tatouage pour tatouer une image d'origine correspondant à ladite image tatouée courante, par analyse du contenu de ladite au moins une partie du message, parmi un premier mode de tatouage délivrant un message comprenant un champ portant un identifiant d'image et un champ portant un haché souple et un deuxième mode de tatouage délivrant un message comprenant un champ portant un identifiant d'image,
ladite détermination comprenant la vérification de la lecture de l'intégralité dudit message, basée sur le contenu dudit champ de contrôle d'erreurs
• Le deuxième mode de tatouage étant déterminé, s'il est vérifié que l'intégralité du message a été lue;
• le premier mode de tatouage étant déterminé, sinon ;
- authentification ou non (23) de ladite séquence d'images tatouées, par analyse du contenu du message et en fonction du mode de tatouage déterminé..

7. Procédé d'authentification selon la revendication 6, **caractérisé en ce que**, si le deuxième mode de tatouage est déterminé, ledit procédé d'authentification comprend une étape de comparaison (431) dudit identifiant d'image avec un identifiant d'image obtenu pour une image tatouée précédente de ladite séquence d'images tatouées.

8. Procédé d'authentification selon la revendication 7, **caractérisé en ce que** si ledit identifiant d'image obtenu pour ladite image tatouée courante et ledit identifiant obtenu pour ladite image tatouée précédente sont successifs, ledit procédé d'authentification comprend une étape de comparaison (432) de ladite image tatouée courante et de ladite image tatouée précédente, délivrant une image de différence représentative d'un mouvement entre ladite image tatouée précédente et ladite image tatouée courante, et **en ce que** ladite étape d'authentification authentifie ladite image tatouée courante si la différence entre ladite image tatouée courante et ladite image tatouée précédente est inférieure à un seuil prédéterminé.

9. Procédé d'authentification selon la revendication 6, **caractérisé en ce que**, si le premier mode de tatouage est déterminé, ledit procédé d'authentification comprend :
- une étape de lecture (441) d'un nombre complémentaire de bits dudit message, correspondant au moins à la taille d'un champ portant un haché souple obtenu pour ladite image tatouée courante ;
- une deuxième sous-étape de vérification (442) de la lecture de l'intégralité dudit message, basée sur le contenu dudit champ de contrôle d'erreurs.

10. Procédé d'authentification selon la revendication 9, **caractérisé en ce que**, si ladite deuxième sous-étape de vérification de la lecture de l'intégralité dudit message confirme que l'intégralité du message a été lue, ledit procédé d'authentification comprend une étape de comparaison (443) de ladite image tatouée courante avec une image tatouée précédente de ladite séquence d'images tatouées, délivrant une image de différence représentative d'un mouvement entre ladite image tatouée précédente et ladite image tatouée courante, et une étape de détermination du haché souple d'au moins une portion de ladite image de différence ; **en ce que** ladite étape d'authentification authentifie ladite image tatouée courante si le haché souple obtenu au cours de ladite étape de détermination correspond au contenu dudit champ portant un haché souple dudit message.

11. Procédé d'authentification selon la revendication 10, **caractérisé en ce qu'**il comprend une étape de découpage (444) de ladite image de différence en au moins deux zones, une étape de sélection de la zone présentant la plus grande différence, et une étape de vérification (445) que ladite zone sélectionnée correspond au contenu d'un champ portant un identifiant de zone dudit message,
et **en ce que** ledit haché souple est déterminé à partir de ladite zone sélectionnée en cas de vérification positive.

12. Dispositif d'authentification d'une séquence d'images tatouées, apte à authentifier une séquence d'images issue du dispositif de tatouage de la revendication 5, **caractérisé en ce qu'**il comprend un processeur adapté et configuré pour mettre en oeuvre les étapes du procédé d'authentification selon la revendication 6.

13. Programme d'ordinateur comportant des instructions pour la mise en oeuvre d'un procédé selon la revendication 1 ou selon la revendication 6 lorsque ce programme est exécuté par un processeur.

## Patentansprüche

1. Tätowierverfahren einer Bildfolge, welches, für mindestens ein aktuelles Bild der Folge, das von dem ersten Bild der Folge verschieden ist, einen Schritt (11) des Vergleichens des aktuellen Bilds mit einem vorhergehenden Bild der Folge durchführt, wobei ein Differenzbild erhalten wird, das für eine Bewegung zwischen dem vorhergehenden Bild und dem aktuellen Bild repräsentativ ist; **dadurch gekennzeichnet, dass**:
- wenn die Differenz zwischen dem aktuellen Bild und dem vorhergehenden Bild größer ist als eine vorherbestimmte Schwelle, das Verfahren einen Schritt (121) des Tätowierens des aktuellen Bilds durch Einfügen einer Nachricht durchführt, umfassend ein Feld, das einen Identifikator des aktuellen Bilds trägt, ein Feld, das ein flexibles Hash trägt, welches aus mindestens einem Abschnitt des Differenzbilds erhalten wird, und ein Feld zum Steuern von Fehlern;
- wenn nicht, das Verfahren einen Schritt (122) des Tätowierens des aktuellen Bilds durch Einfügen einer Nachricht durchführt, umfassend ein Feld zum Steuern von Fehlern und ein Feld, das einen Identifikator des aktuellen Bilds trägt.

2. Tätowierverfahren einer Bildfolge nach Anspruch 1, **dadurch gekennzeichnet, dass** wenn die Differenz zwischen dem aktuellen Bild und dem vorhergehenden Bild größer ist als die vorherbestimmte Schwelle, dieses einen Schritt des Schneidens des Differenzbilds in mindestens zwei Zonen und einen Schritt des Auswählens der Zone, welche die größte Differenz aufweist, umfasst,
und dadurch, dass das flexible Hash aus der ausgewählten Zone erhalten wird.

3. Tätowierverfahren einer Bildfolge nach Anspruch 2, **dadurch gekennzeichnet, dass** die Nachricht außerdem ein Feld umfasst, das einen Identifikator der ausgewählten Zone trägt.

4. Tätowierverfahren einer Bildfolge nach Anspruch 1, **dadurch gekennzeichnet, dass** das Feld zum Steuern von Fehlern mindestens das Feld, das einen Identifikator des aktuellen Bilds trägt, und das Feld, das ein flexibles Hash trägt, berücksichtigt, wenn die Differenz zwischen dem aktuellen Bild und dem vorhergehenden Bild größer ist als die vorherbestimmte Schwelle, oder, wenn nicht, das Feld, das einen Identifikator des aktuellen Bilds trägt, berücksichtigt.

5. Tätowiervorrichtung einer Bildfolge, umfassend einen Prozessor, der geeignet und ausgelegt ist, die Schritte des Verfahrens nach Anspruch 1 durchzuführen.

6. Authentifizierungsverfahren einer tätowierten Bildfolge, welches geeignet ist, eine Bildfolge zu authentifizieren, die erhalten wird, indem das Tätowierverfahren nach Anspruch 1 durchgeführt wird,
**dadurch gekennzeichnet, dass** dieses die folgenden Schritte, für mindestens ein aktuelles tätowiertes Bild der tätowierten Bildfolge, durchführt:
- Lesen (21) mindestens eines Teils einer Nachricht, die zuvor in das aktuelle tätowierte Bild eingefügt wurde, wobei der mindestens eine gelesene Teil eine Anzahl von Bits umfasst, die der Summe der Größe eines Felds, das einen Identifikator des Bilds trägt, und der Größe eines Felds zum Steuern von Fehlern entspricht, die für das aktuelle tätowierte Bild erhalten werden;
- Bestimmen (22) eines Tätowiermodus, der für das Tätowierverfahren verwendet wird, um ein Originalbild entsprechend dem aktuellen tätowierten Bild zu tätowieren, durch Analyse des Inhalts des mindestens einen Teils der Nachricht, unter einem ersten Tätowiermodus, der eine Nachricht liefert, umfassend ein Feld, das einen Identifikator des Bilds trägt, und ein Feld, das ein flexibles Hash trägt, und einem zweiten Tätowiermodus, der eine Nachricht liefert, umfassend ein Feld, das einen Identifikator des Bilds trägt, wobei das Bestimmen das Verifizieren des Lesens der gesamten Nachricht umfasst, auf der Basis des Inhalts des Felds zum Steuern von Fehlern;
• wobei der zweite Tätowiermodus bestimmt wird, wenn verifiziert wird, dass die gesamte Nachricht gelesen wurde;
• wobei, wenn nicht, der erste Tätowiermodus bestimmt wird;
- Authentifizieren oder nicht (23) der tätowierten Bildfolge, durch Analyse des Inhalts der Nachricht und als Funktion des bestimmten Tätowiermodus.

7. Authentifizierungsverfahren nach Anspruch 6,
**dadurch gekennzeichnet, dass**, wenn der zweite Tätowiermodus bestimmt wird, das Authentifizierungsverfahren einen Schritt (431) des Vergleichens des Identifikators des Bilds mit einem Identifikator des Bilds, der für ein vorhergehendes tätowiertes Bild der tätowierten Bildfolge erhalten wird, umfasst.

8. Authentifizierungsverfahren nach Anspruch 7,
**dadurch gekennzeichnet, dass**, wenn der Identifikator des Bilds, der für das aktuelle tätowierte Bild erhalten wird, und der Identifikator, der für das vorhergehende Bild erhalten wird, sukzessiv sind, das Authentifizierungsverfahren einen Schritt (432) des Vergleichens des aktuellen tätowierten Bilds und des vorhergehenden tätowierten Bilds umfasst, wobei ein Differenzbild geliefert wird, das für eine Bewegung zwischen dem vorhergehenden tätowierten Bild und dem aktuellen tätowierten Bild repräsentativ ist, und dadurch, dass der Authentifizierungsschritt das aktuelle tätowierte Bild authentifiziert, wenn die Differenz zwischen dem aktuellen tätowierten Bild und dem vorhergehenden tätowierten Bild kleiner ist als eine vorherbestimmte Schwelle.

9. Authentifizierungsverfahren nach Anspruch 6,
**dadurch gekennzeichnet, dass**, wenn der erste Tätowiermodus bestimmt wird, das Authentifizierungsverfahren umfasst:
- einen Schritt (441) des Lesens einer komplementären Anzahl von Bits der Nachricht, entsprechend mindestens der Größe eines Felds, das ein flexibles Hache trägt, welches für das aktuelle tätowierte Bild erhalten wird;
- einen zweiten Teilschritt (442) des Verifizierens des Lesens der gesamten Nachricht auf der Basis des Inhalts des Felds zum Steuern von Fehlern.

10. Authentifizierungsverfahren nach Anspruch 9,
**dadurch gekennzeichnet, dass**, wenn der zweite Teilschritt des Verifizierens des Lesens der gesamten Nachricht bestätigt, dass die gesamte Nachricht gelesen wurde, das Authentifizierungsverfahren einen Schritt (443) des Vergleichens des aktuellen tätowierten Bilds mit einem vorhergehenden tätowierten Bild der tätowierten Bildfolge, wobei ein Differenzbild geliefert wird, das für eine Bewegung zwischen dem vorhergehenden tätowierten Bild und dem aktuellen tätowierten Bild repräsentativ ist, und einen Schritt des Bestimmens des flexiblen Haches mindestens eines Abschnitts des Differenzbilds umfasst;
dadurch, dass der Authentifizierungsschritt das aktuelle tätowierte Bild authentifiziert, wenn das flexible Hache, das während des Bestimmungsschritts erhalten wird, dem Inhalt des Felds entspricht, das ein flexibles Hache der Nachricht trägt.

11. Authentifizierungsverfahren nach Anspruch 10,
**dadurch gekennzeichnet, dass** dieses einen Schritt (444) des Schneidens des Differenzbilds in mindestens zwei Zonen, einen Schritt des Auswählens der Zone, welche die größte Differenz aufweist, und einen Schritt (445) des Verifizierens, dass die ausgewählte Zone dem Inhalt eines Felds entspricht, das einen Identifikator der Zone der Nachricht trägt, umfasst,
und dadurch, dass das flexible Hash aus der ausgewählten Zone im Fall einer positiven Verifikation bestimmt wird.

12. Authentifizierungsvorrichtung einer tätowierten Bildfolge, welche geeignet ist, eine Bildfolge zu authentifizieren, die von einer Tätowiervorrichtung nach Anspruch 5 stammt, **dadurch gekennzeichnet, dass** diese einen Prozessor umfasst, der geeignet und ausgelegt ist, die Schritte des Authentifizierungsverfahrens nach Anspruch 6 durchzuführen.

13. Computerprogramm, umfassend Instruktionen zur Durchführung eines Verfahrens nach Anspruch 1 oder nach Anspruch 6, wenn dieses Programm von einem Prozessor ausgeführt wird.

## Claims

1. Method for watermarking a sequence of images, implementing, for at least a current image of said sequence, different from the first image of said sequence, a step for comparison (11) of said current image with a preceding image of said sequence, delivering a difference image representative of a movement between said preceding image and said current image;
**characterized in that**:
- if the difference between said current image and said preceding image is greater than a predetermined threshold, said method implements a step for watermarking (121) said current image by insertion of a message comprising a field carrying an identifier of said current image, a field carrying a soft hash obtained from at least a portion of said difference image, and an error monitoring field;
- otherwise, said method implements a step for watermarking (122) said current image by insertion of a message comprising an error monitoring field and a field carrying an identifier of said current image.

2. Method for watermarking a sequence of images according to Claim 1, **characterized in that**, if the difference between said current image and said preceding image is greater than said predetermined threshold, it comprises a step for dividing said difference image into at least two regions and a step for selection of the region having the greatest difference, and **in that** said soft hash is obtained from said selected region.

3. Method for watermarking a sequence of images according to Claim 2, **characterized in that** said message furthermore comprises a field carrying an identifier of said selected region.

4. Method for watermarking a sequence of images according to Claim 1, **characterized in that** said error monitoring field takes into account at least said field carrying an identifier of said current image and said field carrying a soft hash if the difference between said current image and said preceding image is greater than said predetermined threshold, or takes into account said field carrying an identifier of said current image otherwise.

5. Device for watermarking a sequence of images, comprising a processor adapted and configured for implementing the steps of the method according to Claim 1.

6. Method for authenticating a sequence of watermarked images, designed to authenticate a sequence of images obtained by implementing the watermarking method of Claim 1, **characterized in that** it implements the following steps, for at least a current watermarked image from said sequence of watermarked images:
- reading (21) of at least a part of a message previously inserted into said current watermarked image, said at least a part read comprising a number of bits corresponding to the sum of the size of a field carrying an image identifier and of the size of an error monitoring field, obtained for said current watermarked image;
- determination (22) of a watermarking mode used by said watermarking method for watermarking an original image corresponding to said current watermarked image, by analysis of the content of said at least a part of the message, from between a first watermarking mode delivering a message comprising a field carrying an image identifier and a field carrying a soft hash and a second watermarking mode delivering a message comprising a field carrying an image identifier, said determination comprising the verification of the reading of the entirety of said message, based on the content of said error monitoring field
• the second watermarking mode being determined, if it is verified that the entirety of the message has been read;
• the first watermarking mode being determined, otherwise;
- authentication or otherwise (23) of said sequence of watermarked images, by analysis of the content of the message and depending on the watermarking mode determined.

7. Authentication method according to Claim 6, **characterized in that**, if the second watermarking mode is determined, said authentication method comprises a step for comparison (431) of said image identifier with an image identifier obtained for a preceding watermarked image from said sequence of watermarked images.

8. Authentication method according to Claim 7, **characterized in that**, if said image identifier obtained for said current watermarked image and said identifier obtained for said preceding watermarked image are successive, said authentication method comprises a step for comparison (432) of said current watermarked image and of said preceding watermarked image, delivering a difference image representative of a movement between said preceding watermarked image and said current watermarked image, and **in that** said authentication step authenticates said current watermarked image if the difference between said current watermarked image and said preceding watermarked image is less than a predetermined threshold.

9. Authentication method according to Claim 6, **characterized in that**, if the first watermarking mode is determined, said authentication method comprises:
- a step for reading (441) a complementary number of bits of said message, corresponding at least to the size of a field carrying a soft hash obtained for said current watermarked image;
- a second sub-step for verification (442) of the reading of the entirety of said message, based on the content of said error monitoring field.

10. Authentication method according to Claim 9, **characterized in that**, if said second sub-step for verification of the reading of the entirety of said message confirms that the entirety of the message has been read, said authentication method comprises a step for comparison (443) of said current watermarked image with a preceding watermarked image from said sequence of watermarked images, delivering a difference image representative of a movement between said preceding watermarked image and said current watermarked image, and a step for determination of the soft hash from at least a portion of said difference image;
**in that** said authentication step authenticates said current watermarked image if the soft hash obtained in the course of said determination step corresponds to the content of said field carrying a soft hash from said message.

11. Authentication method according to Claim 10, **characterized in that** it comprises a step for dividing (444) said difference image into at least two regions, a step for selection of the region having the greatest difference, and a step for verifying (445) that said selected region corresponds to the content of a field carrying a region identifier of said message, and **in that** said soft hash is determined from said selected region in the case of a positive verification.

12. Device for authenticating a sequence of watermarked images, designed to authenticate a sequence of images produced by the watermarking device of Claim 5, **characterized in that** it comprises a processor adapted and configured for implementing the steps of the authentication method according to Claim 6.

13. Computer program comprising instructions for implementing a method according to Claim 1 or according to Claim 6 when this program is executed by a processor.
